(19) Europäisches Patentamt
European Patent Office
Office européen des brevets

(11) **EP 1 925 698 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(21) Anmeldenummer: **06024372.2**

(22) Anmeldetag: **24.11.2006**

(51) Int Cl.:
*D03C 1/00* *(2006.01)*     *F16H 35/02* *(2006.01)*

(54) **Getriebe für einen Webschaftantrieb**

Transmission for a heald drive

Engrenage pour entraînement de lame

(84) Benannte Vertragsstaaten:
**BE DE FR IT**

(43) Veröffentlichungstag der Anmeldung:
**28.05.2008 Patentblatt 2008/22**

(73) Patentinhaber: **Groz-Beckert KG**
**72458 Albstadt (DE)**

(72) Erfinder: **Pohl, Gerhard**
**72458 Albstadt (DE)**

(74) Vertreter: **Rüger, Barthelt & Abel**
**Patentanwälte**
**Postfach 10 04 61**
**73704 Esslingen (DE)**

(56) Entgegenhaltungen:
**DE-A1- 3 730 087     US-A- 5 107 901**
**US-A- 5 653 268**

**Beschreibung**

Die Erfindung betrifft ein Getriebe für einen Antrieb eines Webschafts.

Webmaschinen weisen einen so genannten Webschaft auf, der durch einen im Wesentlichen rechteckigen Rahmen gebildet ist, der eine große Anzahl Weblitzen trägt. Die Weblitzen führen die Kettfäden, um diese zur Ausbildung eines Webfachs gezielt aus einer Kettfadenebene heraus zu bewegen. Dazu muss der Webschaft nach bestimmten Vorgaben auf und ab gehend bewegt werden. Als Antriebe dienen dazu so genannte Schaftgetriebe, die an ihrem Abtrieb eine schwingende hin und her gehende Bewegung erzeugen. Diese wird über ein Gestänge auf den Webschaft übertragen. Die schwingende hin und her gehende Bewegung des Abtriebs wird in der Regel aus einer konstanten Drehbewegung einer Antriebswelle abgeleitet. Wird dazu bspw. ein Exzentergetriebe benutzt, besteht ein fest vorgegebener Zusammenhang zwischen der Drehbewegung der Eingangswelle und der schwingenden Bewegung des Abtriebs. Die Bewegung desselben entspricht dann weitgehend einer Sinusschwingung.

Aus der DE 691 09 899 T2 sind verschiedene Möglichkeiten bekannt, um einer konstanten Drehbewegung am Eingang des Schaftgetriebes periodische Beschleunigungen und Verzögerungen zu überlagern. Beispielsweise dient dazu ein Getriebe, das aus einem Hohlzahnrad, zwei umlaufenden Planetenzahnrädern und einem Koppelgetriebe besteht. Die umlaufenden Planetenräder sind über Kurbeln und Pleuels mit an der Ausgangswelle vorhandenen Hebelarmen verbunden, um die Ausgangswelle zu drehen.

Bei diesem Getriebe kann es zu unterschiedlichen Belastungen der beiden Planetenräder kommen.

Aus der DE-A-37 30 087 ist eine Schaftmaschine für eine Webmaschine bekannt. Die Schaftmaschine enthält ein Planetengetriebe, dessen Sonnenrad zur Bewegung des Webschafts angetrieben ist. Sein Hohlrad ist über einen Verstellmechanismus drehfest gesichert, wobei der Verstellmechanismus die Drehposition des Hohlrads nach Vorgabe festlegen kann. Die Drehposition des Hohlrads kann zur Einstellung der Apparatur verstellt werden. Der Planetenträger treibt einen Exzenter, der über ein Pleuel den Abtrieb der Schaftmaschine schwingend antreibt.

Die Form der Exzenterscheibe legt das Bewegungsgesetz, d.h. die Form der Schwingungsbewegung unveränderlich fest.

Es werden jedoch zunehmend Bewegungsformen des Abtriebs der Schaftmaschine angestrebt, die sich mit einer Exzenterscheibe nicht erreichen lassen.

Davon ausgehend, ist es Aufgabe der Erfindung ein verbessertes Getriebe für einen Antrieb eines Webschafts zu schaffen.

Diese Aufgabe wird mit dem Getriebe nach Anspruch 1 gelöst:

Das erfindungsgemäße Getriebe enthält ein Planetengetriebe mit einem Hohlrad, einem Planetenträger mit wenigstens einem Planetenrad und mit einem Sonnenrad. Außerdem weist das Getriebe ein Koppelgetriebe zur Verbindung des wenigstens einen Planetenrads mit der Ausgangswelle auf.

Die Antriebseinrichtung wirkt auf zumindest ein Element des Planetengetriebes, d.h. auf das Hohlrad, auf den Planetenträger oder auf das Sonnenrad. In diesem Fall ist zumindest ein weiteres Element des Planetengetriebes z.B. das Hohlrad oder das Sonnenrad blockiert. Bei einer bevorzugten Ausführungsform sind jedoch zwei der Elemente des Planetengetriebes bspw. das Hohlrad und der Planetenträger angetrieben, während das dritte Element des Planetengetriebes, in diesem Fall das Sonnenrad, ungebremst frei drehbar ist. Es bewirkt in diesem Fall lediglich eine drehfeste Kopplung der Planetenräder untereinander und eine Abstützung der Planetenräder nach innen.

In einer bevorzugten Ausführungsform sind die Planetenräder und somit auch das Hohlrad und das Sonnenrad unrund ausgebildet. Damit erhält das Planetenrad bei gleichförmiger Drehung des Planetenträgers entsprechend seiner Unrundheit eine beschleunigte und verzögerte Eigendrehbewegung. Diese wird zusätzlich zu der von dem Koppelgetriebe verursachten Bewegungsmodulation als weitere Modulation auf die Bewegung der Ausgangswelle aufgeprägt. Auf diese Weise kann durch entsprechende Gestaltung der Unrundheit der Planetenräder sowie des Hohlrads und des Sonnenrads nahezu jedes gewünschte Bewegungsgesetz für die Bewegung des Abtriebs des Schaftgetriebes realisiert werden. Dies eröffnet die Möglichkeit, vorgegebene Bewegungsverläufe ohne Verwendung von Kurvenscheiben und Nockenfolgern zu erzielen.

Das Sonnenrad, das mindestens eine Planetenrad und das Hohlrad sind, auch wenn sie unrund ausgebildet sind, d.h. von der Kreisform abweichend, so aufeinander abgestimmt, dass sie in ständigem kämmenden Eingriff miteinander stehen.

Bei Ausbildung des Planetengetriebes als Unrundzahnradgetriebe mit mindestens einem Planetenrad, dessen Radius nicht konstant ist, sowie einem entsprechenden dazu passend ausgebildeten Hohlrad, kann im Einzelfall auf das Sonnenrad verzichtet werden. In diesem Fall besteht das Getriebe aus einem Hohlrad mit Innenverzahnung, wenigstens einem Planetenrad, das eine Außenverzahnung aufweist, die mit der Innenverzahnung des Hohlrads in ständigem kämmenden Eingriff steht, einem Planetenträger, an dem das wenigstens eine Planetenrad drehbar gelagert ist, und einer Antriebseinrichtung zum Antrieb des Planetenträgers sowie einer Ausgangswelle, die über ein Koppelgetriebe mit dem wenigstens einen Planetenrad verbunden ist, wobei das Planetenrad einen Radius aufweist, der entlang seines Umfangs variabel ist. Das Planetenrad hat somit zumindest ein Durchmessermaximum und zumindest ein Durchmesserminimum. Auch mit einer solchen Anordnung lässt sich der Bewegungszusammenhang mit nicht sinusförmigem Zeitverlauf des Verdrehwinkels zwischen Eingangswelle und Ausgangswelle herstellen.

Unabhängig davon, ob ein Sonnenrad tatsächlich vorhanden ist oder ob es weggelassen ist, ist das Verhältnis zwischen dem Umfang des zwischen die Planetenräder passenden Sonnenrads und dem Umfang des mindestes einen Planetenrad vorzugsweise ganzzahlig festgelegt. In diesem Fall können das Sonnenrad und das Planetenrad kreisrund oder unrund gestaltet werden.

Die Begriffe "rund" bzw. "unrund" beziehen sich, wenn auf Zahnräder Bezug genommen wird, auf die Form des von dem betreffenden Zahnrad festgelegten Teilkreises.

Das bevorzugte Getriebe weist zumindest drei Planetenräder auf. Dadurch wird das Antriebsmoment an drei Positionen übertragen und auftretende Lagerbelastungen werden entsprechend verringert. Es ist eine hohe Leistungsübertragung mit optimaler Kraftverzweigung und Laufruhe möglich. Es wird ein hoher Wirkungsgrad erreicht. Es können mit dem Konzept des Planetengetriebes mit unrunden Zahnrädern die verschiedensten gewünschten Bewegungsgesetze realisiert werden. Unter dem Begriff "Bewegungsgesetz" wird in diesem Zusammenhang der Zeitlauf des Verdrehwinkels zwischen Eingangswelle und Ausgangswelle bezeichnet. Das Planetengetriebe kann nach außen abgeschlossen ausgebildet werden, wodurch eine Dauerschmierung der Verzahnung möglich wird. Außerdem lässt sich eine einfache Montage realisieren.

Weitere Einzelheiten vorteilhafter Ausführungsformen der Erfindung sind Gegenstand von Ansprüchen der Zeichnung oder der Beschreibung.

In der Zeichnung sind Ausführungsbeispiele der Erfindung veranschaulicht. Es zeigen:

Fig. 1      einen Webschaft mit Schaftantrieb in schematisierter Darstellung,

Fig. 2      ein Vorgelegetriebe für den Schaftantrieb nach Figur 1 in schematisierter, dabei aber teilweise körperlicher perspektivischer, teilweise geschnittener Ansicht,

Fig. 3      das Vorgelegegetriebe nach Figur 2 in schematischer Darstellung,

Fig. 4      eine abgewandelte Ausführungsform des Vorgelegegetriebes in schematisierter Prinzipdarstellung,

Fig. 5      schematische Darstellungen der Schwingbewegung des Webschafts, unter Anwendung verschiedener Bewegungsmodulationen,

Fig. 6 und 7      weitere Ausführungsformen des Vorgelegetriebes, in schematisierter teilweise körperlicher und teilweise geschnittener Perspektivdarstellung,

Fig. 8      eine abgewandelte Ausführungsform des Vorgelegegetriebes, in schematisierter Prinzipdarstellung, und

Fig. 9      eine weitere abgewandelte Ausführungsform des Vorgelegegetriebes in schematisierter Prinzipdarstellung.

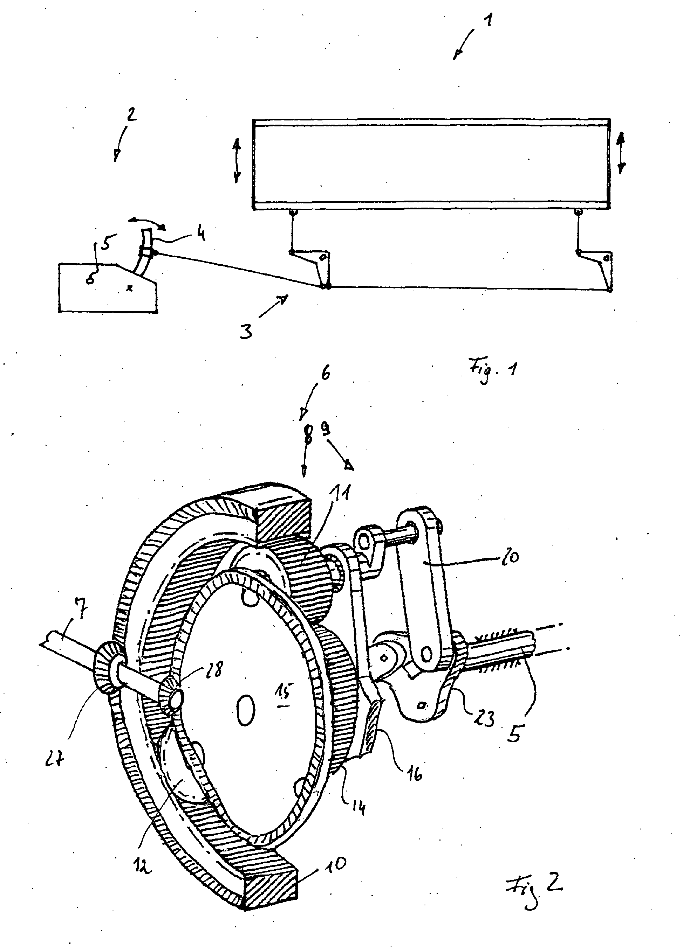

In Figur 1 ist ein Webschaft 1 mit zugehörigem Schaftgetriebe 2 veranschaulicht, das über ein Gestänge 3, die durch zwei Pfeile angedeutete Auf- und Abbewegung des Webschafts 1 bewirkt. Das Schaftgetriebe 2 weist eine Schwinge 4 auf, die eine hin und her schwingende Bewegung ausführt. Diese wird bspw. über ein Exzentergetriebe von der Drehung einer Welle 5 abgeleitet. Ist diese Drehung eine konstante weder beschleunigte noch verzögerte Drehbewegung, entspricht die Bewegung des Webschafts 1 im Wesentlichen einer Sinusschwingung. Dabei wird von Abweichungen von der Sinusform abgesehen, die durch das Gestänge 3 und das Pleuel zum Abtrieb der Schwinge 4 verursacht werden. Bei dem erfindungsgemäßen Schaftantrieb ist die Bewegung der Welle 5 jedoch keine konstante Drehbewegung. Vielmehr wird mittels eines als Vorgelege dienenden Getriebes 6 gemäß Figur 2 an einer mit der Welle 5 übereinstimmenden Ausgangswelle eine Drehbewegung erzeugt, die gegenüber einer Eingangswelle 7 eine modulierte Bewegung ausführt. Zwischen dem aktuellen Drehwinkel der Eingangswelle 7 und dem aktuellen Drehwinkel der Welle 5 steht somit ein Differenzwinkel $\phi$, der nach vorgegebenem Gesetz oszilliert. Dies wird durch das Getriebe 6 bewirkt, dass die Drehbewegung der Eingangswelle 7 auf die Welle 5 überträgt und ihr dabei eine Zusatzbewegung überlagert.

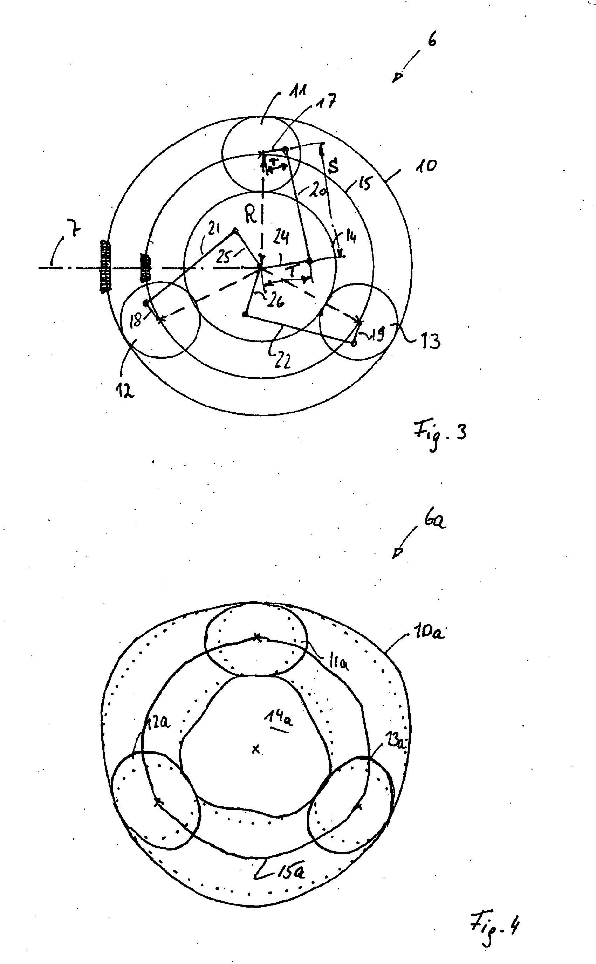

Das Getriebe 6 besteht aus einem Planetengetriebe 8 und einem Koppelgetriebe 9. Zu dem Planetengetriebe 8 gehören ein Hohlrad 10 zumindest ein, vorzugsweise mehrere, Planetenräder 11, 12, 13 (siehe ergänzend Figur 3) und zumindest optional ein Sonnenrad 14. Das Hohlrad weist eine Innenverzahnung auf. Die Planetenräder 11, 12, 13 sind mit einer Außenverzahnung versehen. Ebenso ist das Sonnenrad 14 mit einer Außenzahnung versehen. Das Sonnenrad 14 und die Planetenräder 11, 12, 13 stehen in ständigem kämmenden Eingriff. Die Planetenräder 11, 12, 13 und das Hohlrad 10 stehen ebenfalls in ständigem kämmenden Eingriff miteinander. Die Planetenräder 11, 12, 13 menden Eingriff miteinander. Die Planetenräder 11, 12, 13 sind an einem Planetenträger 15 drehbar gelagert, der seinerseits um die Achse des Sonnenrads 14 drehbar gelagert ist. Die Planetenräder 11 bis 13 sind zwischen dem Planetenträger 15 und einem ggfs. vorgesehenen weiteren Planetenträger 16 gehalten.

Wie in Figur 2 anhand des Planetenrads 11 veranschaulicht ist und insgesamt aus Figur 3 hervorgeht, sind die Planetenräder 11, 12, 13 jeweils drehfest mit einer Kurbel 17, 18, 19 verbunden, die den Eingang des Koppelgetriebes 9 bilden. Die Kurbeln 17, 18, 19 sind über Schleppstangen oder Pleuel 20, 21, 22 mit einem Mitnehmer 23 verbunden, der für jedes Pleuel 20, 21, 22 einen Anlenkpunkt aufweist. Der Mitnehmer 23 kann als Platte oder Stern ausgebildet sein. Er ist mit der Welle 5 drehfest verbunden. Der Abstand von der Drehachse der Welle 5 und dem jeweiligen Anlenkpunkt des Pleuels 20, 21, 22 bildet jeweils einen Hebelarm 24, 25, 26. Die Längen r, der mit den Planetenrädern 11, 12, 13 verbundenen Kurbeln 17, 18, 19, sind untereinander gleich. Außerdem sind die Kurbeln 17, 18, 19 an den Planetenrädern 11, 12, 13 gleich ausgerichtet.

Die Längen S der Pleuel 20, 21, 22 sind untereinander ebenfalls gleich. Außerdem sind die Längen T der Hebelarme 24, 25, 26 untereinander gleich. Die Längen r, T und S stehen in folgender Beziehung zueinander:

$$T = (2 \cdot \sqrt{2} - 2) \cdot R$$

$$S = \sqrt{R^2 - r^2}$$

$$r = (\sqrt{2} - 1) \cdot R$$

Dabei ist R der Abstand zwischen der Drehachse des jeweiligen Planetenrads 11, 12, 13 und der Drehachse des Sonnenrads 14.

Das Planetengetriebe 8 ist doppelt angetrieben. Wie Figur 2 zeigt, sind sowohl der Planetenträger 15 als auch das Hohlrad 10 mit einer entsprechenden Hypoid- oder Kegelverzahnung versehen oder mit entsprechenden Zahnrädern verbunden. Diese Verzahnungen des Planetenträgers 15 und des Hohlrads 10 stehen mit entsprechenden Hypoidzahnrädern oder Kegelrädern 27, 28 in kämmendem Eingriff. Die Kegelräder 27, 28 sind drehfest mit der Eingangswelle 7 verbunden. Das Sonnenrad 14 ist frei drehbar gelagert. Es kann auch zwischen den Planetenrädern 11, 12, 13 schwimmend gehalten sein. Die Planetenräder 11, 12, 13 können, wie Figur 13 veranschaulicht, als runde Zahnräder ausgebildet sein. Entsprechend sind das Sonnenrad 14 und das Hohlrad 10 ebenfalls rund, d.h. alle Zahnräder weisen einen konstanten Radius auf. Bei einer bevorzugten Ausführungsform sind jedoch unrunde Planetenräder 11a, 12a, 13a verwendet. In Figur 4 sind die Abweichungen von der jeweils gepunktet angedeuteten Kreisform stark überhöht dargestellt. Entsprechend komplementär sind auch ein unrund ausgebildetes Sonnenrad 14a und ein unrund ausgebildetes Hohlrad 10a vorgesehen, wobei das Sonnenrad 14a optional ist - es kann auch entfallen.

Die Radien in der Planetenräder 11a, 12a, 13a weisen jeweils zumindest ein Maximum und ein Minimum vorzugsweise zwei Maxima und zwei Minima auf. Das Sonnenrad 14a und das Hohlrad 10a weisen Maxima und Minima ihres jeweiligen Radius auf, deren Anzahl der Planetenräder entspricht. Die Umfänge der Planetenräder 11a, 12a, 13a und des Sonnenrads 14a sowie des Hohlrads 10a sind so aufeinander abgestimmt, dass ein Planetenrad 12a für einen drehfest auf dem Sonnenrad 14a sitzenden Beobachter genau eine halbe Umdrehung vollführt, bis es die Position seines Vorgängers oder Nachfolgers eingenommen hat.

Das insoweit beschriebene Schaftgetriebe 2 arbeitet wie folgt:

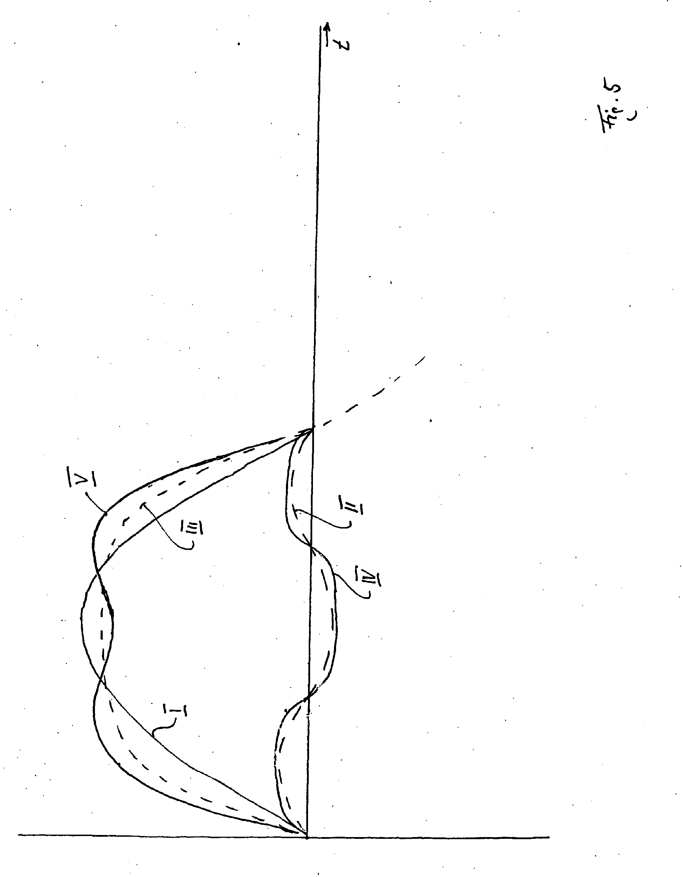

Die Welle 7 dreht den Planetenträger 15 und das Hohlrad 10 bzw. 10a mit konstanten unterschiedlichen Drehzahlen. Durch die Drehzahldifferenz zwischen dem Hohlrad 10 bzw. 10a und dem Planetenträger 15 entsteht eine Abwälzbewegung der Planetenräder 11, 12, 13 bzw. 11a, 12a, 13a an der Innenverzahnung des Hohlrads 10 oder 10a. Diese Drehbewegung wird über die Kurbeln 17, 18, 19 in einer hin- und hergehenden Bewegung der Pleuel 20, 21, 22 umgesetzt. Diese übertragen somit die gleichförmige Drehbewegung des Planetenträgers 15 mit einer zusätzlich überlagerten Schwingbewegung (d.h. periodischen Bescheunigung und Verlangsamung) auf den Mitnehmer 23. Figur 5 veranschaulicht dazu in einer ersten kurve I eine Sinusschwingungsbewegung wie sie von dem Webschaft 1 vollführt würde, wenn dieser herkömmlich von einem gleichmäßig drehenden Exzenter angetrieben würde. Die durch die Schwingungsbewegung der Pleuel 20, 21, 22 verursachte zeitabhängige Änderung des Differenzwinkels ist in Figur 5 als Kurve II eingetragen. Das Getriebe 6b nach Figur 3 erzeugt an seinem Ausgang an der Welle 5 eine Drehbewegung, der die Schwingung gemäß Kurve II überlagert ist. Ein angeschlossener über einen Exzenter angetriebener Webschaft vollführt dann eine Bewegung gemäß der gestrichelten Kurve III.

Das schematisch veranschaulichte Getriebe 6a gemäß Figur 4 erzeugt an seiner Ausgangswelle 5 eine zusätzlich modulierte Bewegung, weil die Rotation der Planetenräder 11a, 12a, 13a infolge ihrer gezielten Unrundheit ungleichmäßig ist. Als Beispiel veranschaulicht die Kurve IV den Differenzdrehwinkel φ zwischen Eingangswelle und Welle 5 für das Getriebe 6a. Wird die derart angetriebene Welle 5 als Antrieb für das Schaftgetriebe 2 verwendet und treibt somit über einen Exzenter den Webschaft 1 vollführt dieser bspw. eine Bewegung gemäß Kurve V.

Das Getriebe 6a enthält zwei Mittel zur Erzeugung einer der Drehbewegung überlagerten periodischen Beschleunigung und Verzögerung: ein Unrundzahnradgetriebe und ein Koppelgetriebe. Das Unrundzahnradgetriebe ist z.B. als Planetengetriebe ausgeführt. Durch die Kombination von Unrundzahnradgetriebe und Koppelgetriebe lassen sich Bewegungsgesetze erzielen, die allein mit einem Unrundzahnradgetriebe oder allein mit einem Koppelgetriebe nicht zu erreichen sind.

Durch entsprechende Gestaltung der Unrundheit der Planetenräder 11, 12, 13a und des zugehörigen Hohlrads 10a sowie des optionalen Sonnenrads 14a lassen sich nahezu beliebige Kurven für die Bewegung des Webschafts 1 erzielen. Damit kann erreicht werden, dass die an dem Webschaft 1 auftretenden Beschleunigungen minimal werden, wobei die Fachöffnungszeit, d.h. die Zeit, in der der Webschaft 1 in seiner oberen oder unteren Position verharrt, möglichst lang ist. Außerdem können die mechanischen Belastungen des Gestänges 3, sowie des Webschafts 1, wie auch des Schaftgetriebes 2 auf ein Mindestmaß reduziert werden, wodurch die Erhöhung der Tourenzahl der Webmaschine ermöglicht wird.

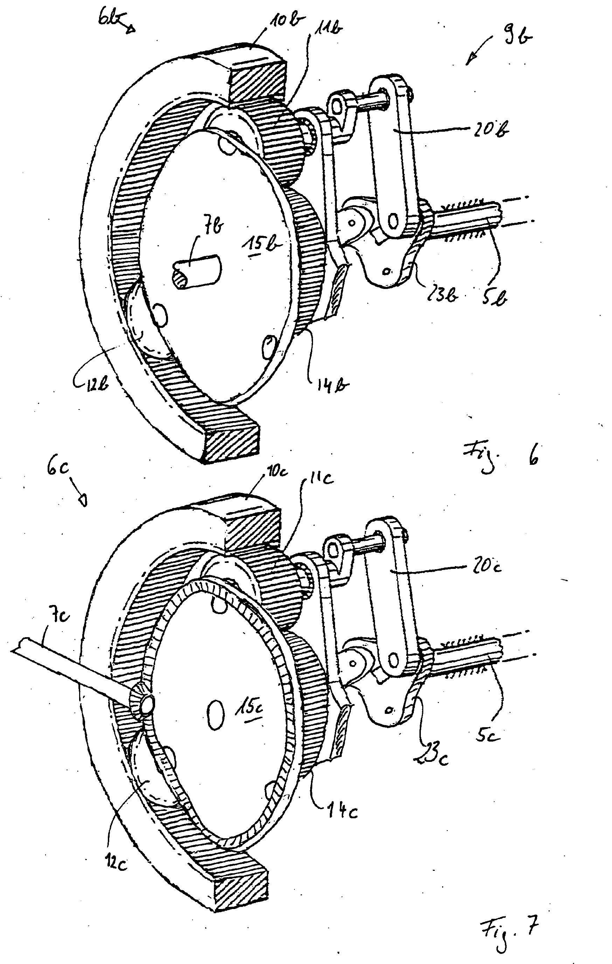

Figur 6 veranschaulicht eine abgewandelte Ausführungsform des erfindungsgemäßen Getriebes als Getriebe 6b. Bei diesem ist der Planetenträger 15b frei drehbar, während das Sonnenrad 14b angetrieben ist. Das Hohlrad 10b ist durch geeignete Mittel drehfest gelagert. Die Planetenräder 11b, 12b können gemäß Figur 3 oder gemäß Figur 4 rund oder unrund ausgebildet sein. Dazu wie auch zur sonstigen Funktionsbeschreibung gilt die vorige Beschreibung entsprechend, wobei dem Bezugszeichen lediglich ein Buchstabenindex "b" hinzuzufügen ist.

Eine weiter abgewandelte Ausführungsform eines erfindungsgemäßen Getriebes veranschaulicht Figur 7 in Form des Getriebes 6c. Bei diesem ist lediglich der Planetenträger 15c drehend angetrieben. Das Hohlrad 10c ist durch geeignete Mittel drehfest gesichert. Das Sonnenrad 14c ist frei drehbar gelagert und dient dem Kraftausgleich zwischen den Planetenräder 11c, 12c, sowie ggfs. dem dritten nicht weiter veranschaulichten Planetenrad das Sonnenrad 14c kann entfallen.

Alternativ kann das Sonnenrad 14c auch mittig unverdrehbar angeordnet sein, während das Hohlrad 10c frei drehbar gelagert ist oder auch entfallen kann. Wiederum kann das Sonnenrad 14c rund oder unrund ausgebildet sein, je nach dem ob die Planetenräder 11c, 12c, 13c gemäß Figur 3 rund oder gemäß Figur 4 unrund ausgebildet sind. Ansonsten gilt die vorige Beschreibung entsprechend, wobei den Bezugszeichen der Beschreibung der Figuren 1 bis 3 ein Buchstabenindex "c" hinzuzufügen und soweit Figur 4 betroffen ist, der Buchstabenindex "a" durch "c" zu ersetzen ist.

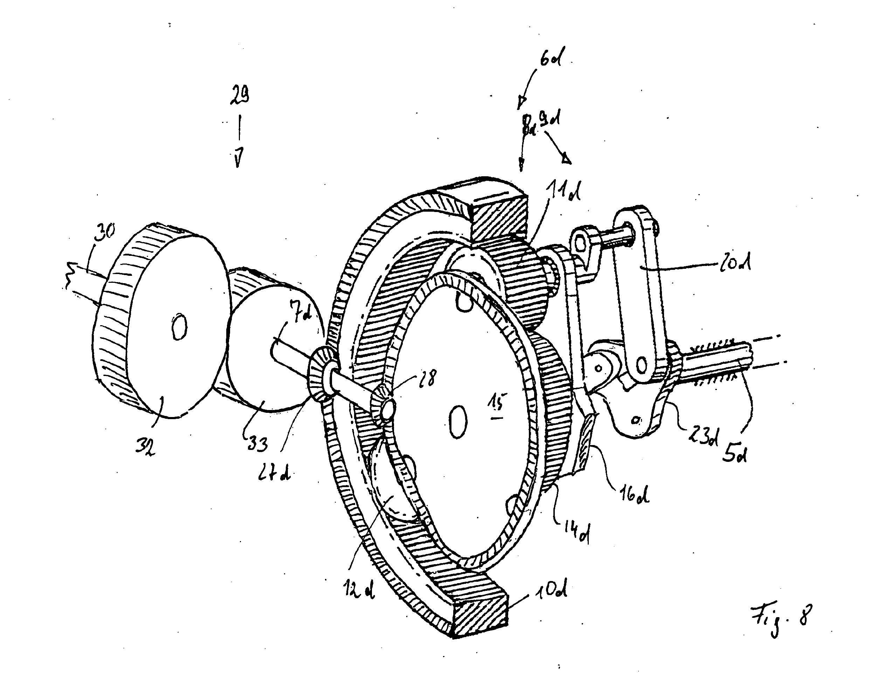

Als weitere Alternative kann gemäß Figur 8 vorgesehen werden, dem Planetengetriebe 6d ein Unrundzahnradgetriebe 29 vorzuschalten, das eine gleichmäßige Drehung einer Antriebswelle 30 in ein beschleunigte und verzögerte Drehbewegung an der Welle 7d umsetzt. Ist das Planetengetriebe 6d mit runden Zahnrädern z.B. gemäß Figur 3 ausgeführt, reduziert sich die Anzahl der erforderlichen unrunden Zahnräder auf Zwei. Durch Austausch der Unrundzahnräder 32, 33 können unterschiedliche Bewegungsgesetze erzeugt werden. Das Planetengetriebe kann aber auch als zusätzliches Unrundzahnradgetriebe gemäß einer der Figuren 2 bis 7 ausgeführt sein. Ansonsten gilt die vorige Beschreibung entsprechend, wobei den Bezugszeichen der Beschreibung der Figuren 1 bis 3 ein Buchstabenindex "d" hinzuzufügen und soweit Figur 4 betroffen ist, der Buchstabenindex "a" durch "d" zu ersetzen ist.

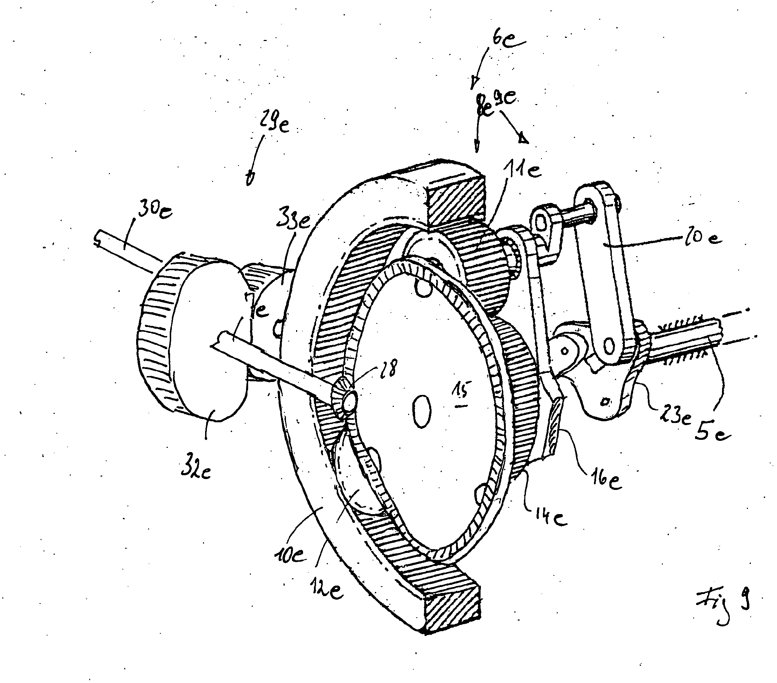

Schließlich kann gemäß Figur 9 vorgesehen werden, dem Planetengetriebe 6e ein Unrundzahnradgetriebe 29e vorzuschalten, das eine gleichmäßige Drehung der Antriebswelle 30e in eine beschleunigte und verzögerte Drehbewegung an der Welle 7e umsetzt, die nur zum Antrieb eines "Eingangs" des Planetengetriebes 6e dient. Die Welle 30e triebt einen anderen "Eingang" des Planetengetriebes 6e direkt mit gleichmäßiger Drehung an. Der "Eingang" kann dabei jeweils der Planetenträger 15e, das Hohlrad 10e oder das Sonnenrad 14e sein. Ist das Planetengetriebe 6e mit runden Zahnrädern z.B. gemäß Figur 3 ausgeführt, reduziert sich die Anzahl der erforderlichen unrunden Zahnräder auf Zwei. Durch Austausch der Unrundzahnräder 32e, 33e können unterschiedliche Bewegungsgesetze erzeugt werden. Durch die Leistungsverzweigung muss das Unrundzahnradgetriebe 29e nur einen Teil der Antriebsenergie übertragen.

Das Planetengetriebe 6e kann aber auch als zusätzliches Unrundzahnradgetriebe gemäß einer der Figuren 2 bis 7 ausgeführt sein. Ansonsten gilt die vorige Beschreibung entsprechend, wobei den Bezugszeichen der Beschreibung der Figuren 1 bis 3 ein Buchstabenindex "e" hinzuzufügen und soweit Figur 4 betroffen ist, der Buchstabenindex "a" durch "e" zu ersetzen ist.

Die vorliegende Erfindung betrifft ein Getriebe für den Antriebsstrang eines Webschafts 1, wobei das Getriebe 6, 6a, 6b, 6c eine Eingangswelle 7, 7b, 7c und eine Ausgangswelle 5, 5b, 5c aufweist. Das Getriebe 6, 6a, 6b, 6c erzeugt zwischen der Eingangswelle 7, 7b, 7c und der Ausgangswelle 5, 5b, 5c einen dem Drehwinkel überlagerten Differenzdrehwinkel, der in Abhängigkeit vom Drehwinkel eine schwingende Veränderung erfährt. Die schwingende Veränderung kann aufgrund unrunder Gestaltung von Planetenrädern 11a, 12a, 13a des Getriebes 6a, 6b, 6c von einer harmonischen Schwingung verschieden sein. Damit lassen sich für die Bewegung des Webschafts 1 bei geringer Getriebe- und Lagerbelastung einfachen Fertigungsmöglichkeiten und kompakter Bauweise nahezu beliebige Bewegungen erzielen.

Bezugszeichenliste

| 1 | Webschaft |
|---|---|
| 2 | Schaftgetriebe |
| 3 | Gestänge |
| 4 | Schwinge |
| 5 | Welle |
| 6 | Getriebe |
| 7 | Eingangswelle |

| 8 | Planetengetriebe |
|---|---|
| 9 | Koppelgetriebe |
| 10 | Hohlrad |
| 11 | Planetenrad |
| 12 | Planetenrad |
| 13 | Planetenrad |
| 14 | Sonnenrad |
| 15 | Planetenträger |
| 16 | Planetenträger |
| 17 | Kurbel |
| 18 | Kurbel |
| 19 | Kurbel |
| 20 | Pleuel |
| 21 | Pleuel |
| 22 | Pleuel |
| 23 | Mitnehmer |
| 24 | Hebelarm |
| 25 | Hebelarm |
| 26 | Hebelarm |
| 27 | Kegelrad |
| 28 | Kegelrad |
| 29 | Unrundzahnradgetriebe |
| 30 | Antriebswelle |
| 31 | |
| 32 | unrundes Zahnrad |
| 33 | unrundes Zahnrad |
| I - V | Kurve |

**Patentansprüche**

1. Getriebe (6, 6a) für einen Antrieb eines Webschafts (1),
mit einem Hohlrad (10, 10a), das eine Innenverzahnung aufweist,
mit wenigstens einem Planetenrad (11, 11a, 11b, 11c), das eine Außenverzahnung aufweist, die mit der Innenverzahnung des Hohlrads (10, 10a, 10b, 10c) in ständigem kämmenden Eingriff steht,
mit einem Planetenträger (15, 15a, 15b, 15c), an dem das wenigstens eine Planetenrad (11, 11a, 11b, 11c) drehbar gelagert ist,
mit einem Sonnenrad (14, 14a, 14b, 14c), das eine Außenverzahnung aufweist und mit dem das wenigstens eine Planetenrad (11, 11a) in ständigem kämmenden Eingriff steht,
mit einer Antriebseinrichtung (7, 7b, 7c), die mit wenigstens einem Element verbunden ist, von denen eines das Hohlrad (10, 10a, 10b, 10c), ein weiteres der Planetenträger (15, 15a, 15b, 15c) und ein anderes das Sonnenrad (14, 14a, 14b, 14c) ist,
**gekennzeichnet durch** eine Ausgangswelle (5), die über ein Koppelgetriebe (9) mit dem wenigstens einen Planetenrad (11, 11a, 11b, 11c) verbunden ist, um eine Drehbewegung von der Antriebseinrichtung (7, 7b, 7c) auf die Ausgangswelle (5) zu übertragen und ihr dabei eine Zusatzbewegung zu überlagern.

2. Getriebe nach Anspruch 1, **dadurch gekennzeichnet, dass** die Antriebseinrichtung (7, 7b, 7c) mit zwei Elementen aus den folgenden verbunden ist: der Planetenträger (15, 15a, 15b, 15c), das Sonnenrad (14, 14a, 14b, 14c) und das Hohlrad (10, 10a, 10b, 10c).

3. Getriebe nach Anspruch 1, **dadurch gekennzeichnet, dass** das wenigstens eine Planetenrad (11a 11b, 11c) einen Radius (r) aufweist, der entlang seines Umfangs variabel ist.

4. Getriebe nach Anspruch 1, **dadurch gekennzeichnet, dass** das Sonnenrad (14a, 14b, 14c) einen Radius (r) aufweist, der entlang seines Umfangs variabel ist.

5. Getriebe nach Anspruch 1, **dadurch gekennzeichnet, dass** das Hohlrad (10a, 10b, 10c) einen Radius aufweist, der entlang seines Umfangs variabel ist.

6. Getriebe nach Anspruch 1, **dadurch gekennzeichnet, dass** das Planetenrad (11a, 11b, 11c) zumindest ein Durchmessermaximum und zumindest ein Durchmesserminimum aufweist.

7. Getriebe nach Anspruch 1, **dadurch gekennzeichnet, dass** an dem Planetenträger (15, 15a, 15b, 15c) wenigstens drei Planetenräder (11, 12, 13, 11a, 12a, 13a) gelagert sind, die jeweils mit dem Sonnenrad (14, 14a) und mit dem Hohlrad (10, 10a) in ständigem kämmenden Eingriff stehen.

8. Getriebe nach Anspruch 1, **dadurch gekennzeichnet, dass** die Anzahl der Planetenräder (11, 12, 13, 11a, 12a, 13a) dem Verhältnis zwischen dem Umfang des Sonnenrades und dem Umfangs jedes Planetenrades entspricht.

9. Getriebe nach Anspruch 1, **dadurch gekennzeichnet, dass** zu dem Koppelgetriebe (9) eine mit dem Planetenrad (11, 11) drehfest verbundene Kurbel (17) mit einer Länge r, ein mit der Ausgangswelle (5) drehfest verbundener Hebelarm (24) mit einer Länge T und ein Pleuel (20) mit einer Länge S gehören, das die Kurbel (17) mit dem Hebelarm (24) verbindet, wobei gilt:

$$T = (2 \cdot \sqrt{2} - 2) \cdot R$$

$$S = \sqrt{R^2 - r^2}$$

$$r = (\sqrt{2} - 1) \cdot R$$

wobei R der Abstand zwischen der Drehachse des Planetenrades (11) und der Drehachse des Sonnenrades (14) ist.

10. Getriebe nach Anspruch 1, **dadurch gekennzeichnet, dass** dem Getriebe (6d, 6e) ein Unrundzahnradgetriebe (29d, 29e) vorgeschaltet ist.


**Claims**

1.  Gear transmission (6, 6a) for a drive of a heald frame (1),
    with an internal gear (10, 10a) having internal toothing,
    with at least one planetary gear (11, 11a, 11b, 11c) having external toothing, which meshes constantly with the internal toothing of the internal gear (10, 10a, 10b, 10c), with a planet carrier (15, 15a, 15b, 15c), on which the at least one planetary gear (11, 11a, 11b, 11c) is rotatably mounted,
    with a sun gear (14, 14a, 14b, 14c), which has external toothing and meshes constantly with the at least one planetary gear (11, 11a),
    with a drive means (7, 7b, 7c), which is connected to at least one element, of which one is the internal gear (10, 10a, 10b, 10c), a further element is the planet carrier (15, 15a, 15b, 15c) and another is the sun gear (14, 14a, 14b, 14c),
    **characterised by** an output shaft (5), which is connected to the at least one planetary gear (11, 11a, 11b, 11c) by means of a coupler mechanism (9) in order to transmit a rotational movement from the drive means (7, 7b, 7c) to the output shaft (5) and thereby superpose an additional movement thereon.

2.  Gear transmission according to claim 1, **characterised in that** the drive means (7, 7b, 7c) is connected to two elements comprising the following: the planet carrier (15, 15a, 15b, 15c), the sun gear (14, 14a, 14b, 14c) and the internal gear (10, 10a, 10b, 10c).

3.  Gear transmission according to claim 1, **characterised in that** the at least one planetary gear (11a, 11b, 11c) has a radius (r), which is variable along its circumference.

4.  Gear transmission according to claim 1, **characterised in that** the sun gear (14a, 14b, 14c, 14d) has a radius (r), which is variable along its circumference.

5.  Gear transmission according to claim 1, **characterised in that** the internal gear (10a, 10b, 10c, 10d) has a radius, which is variable along its circumference.

6.  Gear transmission according to claim 1, **characterised in that** the planetary gear (11a, 11b, 11c) has at least a maximum diameter and at least a minimum diameter.

7.  Gear transmission according to claim 1, **characterised in that** at least three planetary gears (11, 12, 13, 11a, 12a, 13a) are mounted on the planet carrier (15, 15a, 15b, 15c) and respectively mesh constantly with the sun gear (14, 14a) and with the internal gear (10, 10a).

8.  Gear transmission according to claim 1, **characterised in that** the number of planetary gears (11, 12, 13, 11a, 12a, 13a) corresponds to the ratio between the circumference of the sun gear and the circumference of each planetary gear.

9.  Gear transmission according to claim 1, **characterised in that** the coupler mechanism (9) includes a crank (17) with a length r fixed against rotation to the planetary gear (11, 11), a lever arm (24) with a length T fixed against rotation to the output shaft (5) and a connecting rod (20) with a length S, which connects the crank (17) to the lever arm (24), wherein the following applies:

$$T = (2 \cdot \sqrt{2} - 2) \cdot R$$

$$S = \sqrt{R^2 - r^2}$$

$$r = (\sqrt{2} - 1) \cdot R$$

wherein R is the distance between the rotational axis of the planetary gear (11) and the rotational axis of the sun gear (14).

10. Gear transmission according to claim 1, **characterised in that** a non-circular toothed gearing (29d, 29e) is connected in series to the gear transmission (6d, 6e).


**Revendications**

1.  Engrenage (6, 6a) pour l'entraînement d'une lame (1), comprenant :

    - un pignon creux (10, 10a) qui présente une denture interne,

- au moins une roue planétaire (11, 11a, 11b, 11c) présentant une denture externe qui est en prise permanente avec la denture interne du pignon creux (10, 10a, 10b, 10c),

- un support de planétaire (15, 15a, 15b, 15c) sur lequel est monté en rotation au moins une roue planétaire (11, 11a, 11b, 11c),

- une roue solaire (14, 14a, 14b, 14c) qui présente une denture externe et qui est en prise continue avec la roue planétaire (11, 11a) au nombre d'une au moins,

- un dispositif d'entraînement (7, 7b, 7c) qui est relié à au moins un élément qui peut être un pignon creux (10, 10a, 10b, 10c) ou un support de planétaire (15, 15a, 15b, 15c) ou une roue solaire (14, 14a, 14b, 14c),

cet engrenage étant **caractérisé en ce qu'**il présente un arbre de sortie (5) relié par un engrenage d'accouplement (9) à une roue planétaire (11, 11a, 11b, 11c) au nombre d'une au moins, de manière à transmettre le mouvement de rotation du dispositif d'entraînement (7, 7b, 7c) à l'arbre de sortie (5) en lui superposant un mouvement additionnel.

2. Engrenage selon la revendication 1, **caractérisé en ce que** le dispositif d'entraînement (7, 7b, 7c) est relié à deux éléments parmi les suivants : le support planétaire (15, 15a, 15b, 15c), la roue solaire (14, 14a, 14b, 14c) et le pignon creux (10, 10a, 10b, 10c).

3. Engrenage selon la revendication 1, **caractérisé en ce qu'**au moins une roue planétaire (11a, 11b, 11c) présente un rayon qui est variable le long de la périphérie de cette roue.

4. Engrenage selon la revendication 1, **caractérisé en ce que** la roue solaire (14a, 14b, 14c) présente un rayon qui est variable le long de la périphérie de cette roue.

5. Engrenage selon la revendication 1, **caractérisé en ce que** le pignon creux (10a, 10b, 10c) présente un rayon qui est variable le long de la périphérie de ce pignon.

6. Engrenage selon la revendication 1, **caractérisé en ce que** le diamètre de la roue planétaire (11a, 11b, 11c) présente au moins un maximum et au moins un minimum.

7. Engrenage selon la revendication 1, **caractérisé en ce que** sur le support planétaire (15, 15a, 15b, 15c) sont montés au moins trois roues planétaires (11, 12, 13, 11a, 12a, 13a) dont chacune est en prise continue avec la roue solaire (14, 14a) et avec le pignon creux (10, 10a).

8. Engrenage selon la revendication 1, **caractérisé en ce que** le nombre des roues planétaires (11, 12, 13, 11a, 12a, 13a) correspond au rapport entre la périphérie de la roue solaire et la périphérie de chaque roue planétaire.

9. Engrenage selon la revendication 1, **caractérisé en ce qu'**à l'engrenage d'accouplement (9) appartiennent une manivelle (17) solidaire en rotation de la roue planétaire (11) et présentant une longueur r, un bras de levier (24) solidaire en rotation de l'arbre de sortie (24) et présentant une longueur T ainsi qu'une bielle (20), de longueur s, qui relie la manivelle (17) au bras de levier (24), étant précisé que :

$$T = (2.\sqrt{2} - 2).R$$

$$S = \sqrt{R^2 - r^2}$$

$$r = (\sqrt{2} - 1).R$$

R étant la distance entre l'axe de rotation de la roue planétaire (11) et l'axe de rotation de la roue solaire (14).

10 Engrenage selon la revendication 1, **caractérisé en ce qu'**en amont de cet engrenage (6d, 6e) est monté un engrenage à pignons non circulaires (20d, 29e).

1

2

4

5

3

*Fig. 1*

6

8 9

11

10

7

28

15

27

23

5

16

14

12

10

*Fig 2*

Fig. 3

Fig. 4

Fig. 5

6b
10b 11b
9b
20b
7b
15b
23b 5b
12b
14b

Fig. 6

6c
10c 11c
7c
20c
15c
23c
5c
14c
12c

Fig. 7

Fig. 8

EP 1 925 698 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69109899 T2
- DE 3730087 A